# EUROPÄISCHE PATENTSCHRIFT

(11) **EP 1 634 504 B1**
(45) Veröffentlichungstag und Bekanntmachung des Hinweises auf die Patenterteilung: **29.11.2006**
(21) Anmeldenummer: 04021657.4
(22) Anmeldetag: 11.09.2004
(51) Int. Cl.: A23G 3/00, A23L 1/0524

(54) **Verfahren zum Herstellen von Gelierfruchtzucker und Gelierfruchtzucker selbst**
Process for making a gelling fructose composition and composition obtained.
Procédé de fabrication d'une composition de fructose gélifiante, et composition obtenue.

(43) Veröffentlichungstag der Anmeldung: 15.03.2006
(73) Patentinhaber: August Töpfer & Co. (GmbH & Co.), 20539 Hamburg (DE)
(72) Erfinder: Ernst, Rudolf, 20539 Hamburg (DE)
(74) Vertreter: von Eichel-Streiber, Caspar

(56) Entgegenhaltungen:
- EP-A- 0 136 460
- GB-A- 1 214 557

## Beschreibung

Die vorliegende Erfindung betrifft ein Verfahren zum Herstellen von Gelierfruchtzucker durch Vermischen von Fruchtzucker und Pektin, sowie anschließender Zugabe einer Genußsäure.

Derartige Verfahren sind im Stand der Technik in unterschiedlichen Ausführungsformen bekannt. Gelierzucker bestehen üblicherweise aus drei Komponenten, nämlich Zucker, Pektin und Zitronensäure.

Es ist nicht ratsam, diese drei Komponenten einfach trocken zu vermischen, weil das Pektin aufgrund seiner geringen spezifischen Dichte und seines kleinen Kornspektrums starke Tendenzen zur Entmischung zeigt. Dieser Effekt führt dazu, dass die Gelierwirkung eines trocken gemischten Gelierzuckers stark schwankt, was nicht wünschenswert ist. Die Schwankungsbreite des Pektingehaltes einer Trockenmischung kann deshalb typischerweise bis zu +/- 30% betragen, was im Einzelfall dazu führen kann, dass das fertige Gelee viel zu dünn oder zu steif wird.

Deswegen sind schon Verfahren bekannt, die einen entmischungsfreien, stabilen Gelierzucker herstellen, die im wesentlichen auf den folgenden zwei Ansätzen basieren:

Gelierzucker auf der Basis von regulärem Haushaltszucker wird durch Zusatz von Wasser zur Gesamt-Mischung mit anschließender Trocknung hergestellt. Das Pektin wird bei diesem Verfahren an die Zuckerkristalle gebunden. Üblicherweise wird derartiger Gelierzucker in einer Wirbelschicht oder ähnlichen Verfahren hergestellt.

Allerdings können diese Verfahren nicht für die Herstellung von Gelierfruchtzucker verwendet werden, weil Fruchtzucker (Fructose) wesentlich hygroskopischer als Weißzucker (Saccharose) ist, so dass der Wasserzusatz ein Verkleben des Produktes und der Produktionsmaschinen bewirkt. Aus diesem Grunde wird Gelierfruchtzucker dann durch den Zusatz von Pflanzenfetten oder Pflanzenölen stabilisiert. Derartige Verfahren sind bekannt aus den Patenten gemäß EP 0 136 460 A3, der DE 351611 A1 auch der EP 0 777 422 B1. Diese Produkte lassen sich problemlos stabil herstellen, entsprechen aber nicht den Erwartungen der Verbraucher, die an sich keinen unnötigen Zusatz von Fett oder Ölen in ihren Gelees wünschen.

Die vorliegende Erfindung hat sich daher zum Ziel gesetzt, ein Verfahren für die Herstellung von Gelierfruchtzucker zu ermöglichen, dass ohne Fett- oder Ölzusätze arbeiten, jedoch sowohl Entmischungen als auch ein Verkleben des Produktes verhindert.

Erfindungsgemäß wird dieses Ziel in überraschenderweise dadurch erreicht, dass man
a. zunächst ein kleinen Anteil an Fruchtzucker (Fructose) mit Wasser befeuchtet,
b. anschließend möglichst ergiebiges Pektinpulver einrührt oder untermischt,
c. danach das entstandene Gemisch trocknet und unter Beseitigung eventueller Verklumpungen unter Erzeugung einer Vormischung homogenisiert, und
d. abschließend diese Vormischung mit einem größeren Fruchtzuckeranteil und der Genußsäure unter Erzeugung einer Hauptmischung vermischt.

Ausgangsüberlegung dieser Erfindung ist es, mit einem möglichst geringen Wasserzusatz auszukommen, um das Verkleben von vornherein zu unterbinden bzw. stark abzumindern. Dazu ist es sinnvoll ein besonders ergiebiges Pektin auszuwählen, das wenn möglich amidiert und nicht mit Zucker oder anderen Süßungsmitteln zur Standardisierung verschnitten ist, weil auf diese Weise der Wasserverbrauch mit seinen schädlichen Auswirkungen auf die Fructose minimiert wird. Das Pektin wird in einer Vormischung an einen relativ kleinen Anteil des Fruchtzuckers, insbesondere 10 bis 15 Gew.-% der Gesamtmenge der Hauptmischung, durch Wasserzusatz anaglomeriert. Die Erfindung besteht darin, den Wasseranteil in der Vormischung vergleichsweise konzentriert und kurzzeitig auf die Oberfläche der Fruchtzucker-Kristalle wirken zu lassen und so möglichst effizient zu nutzen.

Diese Vormischung wird dann erfindungsgemäß getrocknet und homogenisiert und dabei unter Beseitigung eventueller Verklumpungen auf ein definiertes zuckerähnliches Kornspektrum gebracht. Erst daran anschließend wird die homogenisierte Vormischung mit einem bzw. dem größeren Fruchtzuckeranteil unter Zugabe von Genußsäure unter Erzeugung einer Hauptmischung vermischt.

In der Praxis ist das erfindungsgemäße diskontinuierliche Verfahren besonders geeignet, um Gelierfruchtzuckermenge in einer Größenordnung von 100-500 t/Jahr herzustellen. Hierbei kann man dann auch vorteilhafterweise Durchlaufzeiten für die Stufen a-d pro Charge von mehreren Tagen in Kauf nehmen, so dass für eine hervorragende Trocknung in der Stufe c) 2-5 Tage zur Verfügung stehen. Bisher bekannte Verfahren für die Verabeitung von Weißzucker arbeiten kontinuierlich mit einer Durchlaufzeit von circa 1 Stunde, was bei der Verarbeitung von Fruchtzucker zu einer nicht ausreichenden Trocknung führt.

Der erfindungsgemäße Gelierfruchtzucker hat sich bei Lagerversuchen als stabil gegen Verblockungen und Entmischungen erwiesen.

Er weist folgende erfindungsgemäße Zusammensetzung auf:

| | |
|---|---|
| Fruchtzucker | 93-97 Gew.-% |
| Pektin | 2-6 Gew.-% |
| Genußsäure, insbesondere Zitronensäure | 0,5-2 Gew.-% |
| Wasserzusatz | 0,2 Gew.-% |
| (resultierend aus der Wasserzugabe in die Vormischung) und enthält vorteilhafterweise als Konservierungsstoff | |
| Sorbinsäure | 0,15 - 0,3 Gew.-% |

Weitere Vorteile und Merkmale der vorliegenden Erfindung gehen aus den Unteransprüchen hervor, die auch gemeinsam mit dem Hauptanspruch von erfinderischer Bedeutung sein können.

Im folgenden werden bevorzugte Ausführungsbeispiele der Erfindung zum bessern Verständnis derselben mit ihrer genauen Zusammensetzung angegeben:

| | | |
|---|---|---|
| Gelierfruchtzucker 1:1 | Pektine | 2,00% |
| | Zitronensäure | 1,10% |
| | Fructose | 96,90% |
| | | 100,00% |
| | | |
| Gelierfruchtzucker 2:1 | Pektin | 3,50% |
| | Zitronensäure | 1,30% |
| | Fructose | 95,20% |
| | | 100, 00% |
| | | |
| Gelierfruchtzucker 3:1 | Pektine | 2,50% |
| | Zitronensäure | 1,50% |
| | Fructose | 95,85% |
| | Sorbinsäure | 0,15% |
| | | 100,00% |

Als besonders ergiebige Pektine werden handelsübliche niedrig veresterte Pektine eingesetzt, die auch amidiert sein können, jedoch nicht unbedingt müssen. Je nach Ausgangsrohstoff unterscheidet man Apfel- und Citruspektine oder deren Gemische.

Als amidiertes, niedrig verestertes Citruspektin kann z.B. der Typ LM-104AS-Z der Firma CPKeko mit ca. 10-40 mg Ca²⁺/g Pektin verwendet werden. Der Einsatz des niedrig veresterten, zuckerfreien Apfelpektin Classic AF-801 (E440) der Firma Herbstreith & Fox KG ist ebenso denkbar. Hier beträgt der Veresterungsgrad 41-47%.

## Patentansprüche

1. Verfahren zum Herstellen von Gelierfruchtzucker durch Vermischen von Fruchtzucker und Pektin, sowie anschließender Zugabe einer Genußsäure, **dadurch gekennzeichnet, dass** man
a. zunächst ein kleinen Anteil Fruchtzucker (Fructose) mit Wasser befeuchtet,
b. anschließend Pektinpulver einrührt oder untermischt,
c. danach das entstandene Gemisch trocknet und unter Beseitigung eventueller Verklumpungen auf ein definiertes zuckerähnliches Kornspektrum bringt, und
d. abschließend diese Vormischung mit einem größeren Fruchtzuckeranteil und der Genußsäure unter Erzeugung einer Hauptmischung vermischt.

2. Verfahren nach Anspruch 1, **dadurch gekennzeichnet, dass** man die Stufe a) die Befeuchtung durch Besprühen vornimmt.

3. Verfahren nach Anspruch 1 und 2, **dadurch gekennzeichnet, dass** das Gemisch der Stufen a) und b) aus 80-85 Gew.-% Fruchtzucker, 15-18 Gew.-% Pektin und 1-1,5 Gew.-% Wasser zusammengesetzt wird.

4. Verfahren nach Anspruch 1 bis 3, **dadurch gekennzeichnet, dass** amidierte, niedrig veresterte und mit Süßungsmittel unverschnittene Pektine eingesetzt werden.

5. Verfahren nach Anspruch 1 bis 3, **dadurch gekennzeichnet, dass** man in der Stufe d) ein Gewichtsverhältnis von etwa 1:6-7 von Vormischung zur Hauptmischung ohne weiteren Wasserzusatz , wobei zusammmen mit dem Fruchtzucker Genußsäure von 0,5 - 2 Gew.-% bezogen auf das Fertigprodukt zugemischt wurde.

6. Verfahren nach Anspruch 3, **dadurch gekennzeichnet, dass** man die Stufe d) innerhalb 2-4 Min. pro Charge durchführt.

7. Verfahren nach Anspruch 3 und 4, **dadurch gekennzeichnet, dass** man die Stufe d) mittels eines mechanischen Präzisionsmischers durchführt.

8. Verfahren nach Anspruch 1 bis 2, **dadurch gekennzeichnet, dass** man die Stufe a) in 1-2 Min. und die Stufe b) in 2-4 Min. durchführt.

9. Verfahren nach Anspruch 1, **dadurch gekennzeichnet, dass** man die Trocknung in der Stufe c) 2-5 Tage bei Raumtemperatur und einer Luftfeuchte < 40% durchführt.

10. Gelierfruchtzucker, hergestellt nach einem oder mehreren der vorstehenden Ansprüche 1 bis 9, **gekennzeichnet durch** folgende Zusammensetzung der gebrauchsfertigen Hauptmischung:
| | |
|---|---|
| Fruchtzucker | 93-97 Gew.-% |
| Pektin | 2-6 Gew.-% |
| Genußsäure, insbesondere Zitronensäure | 0,5-2 Gew.-% |
| Wasserzusatz | 0,2 Gew.-% |
(resultierend aus der Wasserzugabe in die Vormischung)

11. Gelierfruchtzucker nach Anspruch 10, **gekennzeichnet durch** Zusatz eines Konservierungsstoffes, insbesondere 0,15-0,3 Gew.% Sorbinsäure.

## Claims

1. Process for producing gelling fructose by mixing fructose and pectin, as well as the subsequent addition of an edible acid, **characterized in that**
a) firstly a small amount of fructose is moistened with water,
b) then pectin powder is stirred in or mixed together,
c) then the resulting mixture is dried and, accompanied by the elimination of any lumps, is brought to a clearly defined, sugar-like grain spectrum and
d) finally this initial mixture is mixed with a larger fructose quantity and the edible acid, accompanied by the production of a main mixture.

2. Process according to claim 1, **characterized in that** moistening stage a) is performed by spraying.

3. Process according to claim 1 and 2, **characterized in that** the mixture of stages a) and b) is composed of 80 to 85 wt.% fructose, 15 to 18 wt.% pectin and 1 to 1.5 wt.% water.

4. Process according to claims 1 to 3, **characterized in that** amidated, low esterified and pectins unblended with sweeteners are used.

5. Process according to claims 1 to 3, **characterized in that** in stage d) there is a weight ratio of initial mixture to main mixture without further water addition of approximately 1:6-7 and, together with the fructose, admixing took place of 0.5 to 2 wt.% of edible acid, based on the finished product.

6. Process according to claim 3, **characterized in that** stage d) is performed in 2 to 4 minutes per batch.

7. Process according to claims 3 and 4, **characterized in that** stage d) is performed by means of a mechanical precision mixer.

8. Process according to claims 1 to 2, **characterized in that** stage a) is performed in 1 to 2 minutes and stage b) in 2 to 4 minutes.

9. Process according to claim 1, **characterized in that** drying in stage c) is performed for 2 to 5 days at ambient temperature and an atmospheric humidity of < 40%.

10. Gelling fructose, produced according to one or more of the preceding claims 1 to 9, **characterized by** the following composition of the ready-to-use main mixture:
| | |
|---|---|
| fructose: | 93-97 wt.% |
| pectin | 2 to 6 wt.% |
| edible acid, particularly citric acid | 0.5 to 2 wt.% |
| water | 0.2 wt.% |
(resulting from the water added to the initial mixture).

11. Gelling fructose according to claim 10, **characterized by** the addition of a preservative, particularly 0.15 to 0.3 wt.% sorbic acid.

## Revendications

1. Procédé de fabrication de sucre de fruit gélifiant par mélange de sucre de fruit et de pectine, suivi de l'addition d'un acide alimentaire, **caractérisé en ce que** :
a. on commence par humecter d'eau une petite proportion de sucre de fruit (fructose),
b. on poursuit en incorporant sous agitation ou en mélangeant de la pectine en poudre,
c. on sèche ensuite le mélange formé et, en évitant la formation éventuelle de grumeaux, on l'amène à une granulométrie définie semblable à celle du sucre, et
d. on finit par mélanger ce prémélange avec une plus grande proportion de fructose et de l'acide alimentaire pour produire un mélange principal.

2. Procédé suivant la revendication 1, **caractérisé en ce qu'**on conduit l'étape a), à savoir l'humectage, par aspersion.

3. Procédé suivant la revendication 1 et 2, **caractérisé en ce que** le mélange des étapes a) et b) est composé de 80 à 85 % en poids de fructose, 15 % à 18 % en poids de pectine et 1 à 1,5 % en poids d'eau.

4. Procédé suivant la revendication 1 à 3, **caractérisé en ce qu'**on utilise des pectines amidées, faiblement estérifiées et non coupées d'agents édulcorants.

5. Procédé suivant la revendication 1 à 3, **caractérisé en ce que** dans l'étape d), on a ajouté en mélangeant dans un rapport en poids d'environ 1:6-7 le prémélange au mélange principal sans autre addition d'eau, en mélangeant avec le fructose l'acide alimentaire en proportion de 0,5 à 2 % en poids par rapport au produit final.

6. Procédé suivant la revendication 3, **caractérisé en ce qu'**on conduit l'étape d) en une période de temps de 2 à 4 minutes par charge.

7. Procédé suivant la revendication 3 et 4, **caractérisé en ce qu'**on conduit l'étape d) au moyen d'un mélangeur mécanique de précision.

8. Procédé suivant la revendication 1 à 2, **caractérisé en ce qu'**on conduit l'étape a) en 1 à 2 minutes et l'étape b) en 2 à 4 minutes.

9. Procédé suivant la revendication 1, **caractérisé en ce que** qu'on conduit le séchage dans l'étape c) pendant 2 à 5 jours à la température ambiante et à une humidité atmosphérique inférieure à 40 %.

10. Sucre de fruit gélifiant, fabriqué suivant l'une ou plusieurs des revendications 1 à 9 précédentes, **caractérisé par** la composition suivante du mélange principal prêt à l'emploi :
| | |
|---|---|
| Fructose | 93 à 97 % en poids |
| Pectine | 2 à 6 % en poids |
| Acide alimentaire, en particulier acide citrique | 0,5 à 2 % en poids |
| Eau ajoutée | 0,2 % en poids |
(résultant de l'addition d'eau au prémélange)

11. Sucre de fruit gélifiant suivant la revendication 10, **caractérisé par** l'addition d'un agent conservateur, en particulier de 0,15 à 0,3 % en poids d'acide sorbique.
